# EUROPÄISCHE PATENTSCHRIFT

(11) **EP 4 257 378 B1**
(45) Veröffentlichungstag und Bekanntmachung des Hinweises auf die Patenterteilung: **09.04.2025**
(21) Anmeldenummer: 23156111.9
(22) Anmeldetag: 10.02.2023
(51) Int. Cl.: B60C 13/02, B29D 30/06, B29D 30/72, B60C 11/01, B60C 13/00

(54) **FAHRZEUGREIFEN MIT AERODYNAMISCH VORTEILHAFTER OBERFLÄCHENSTRUKTUR**
VEHICLE TYRE WITH AERODYNAMICALLY ADVANTAGEOUS SURFACE STRUCTURE
PNEU DE VÉHICULE À STRUCTURE DE SURFACE AÉRODYNAMIQUE AVANTAGEUSE

(30) Priorität: 07.04.2022 DE 102022203474
(43) Veröffentlichungstag der Anmeldung: 11.10.2023
(73) Patentinhaber: Continental Reifen Deutschland GmbH, 30175 Hannover (DE)
(72) Erfinder: Behr, Ulrich, 30165 Hannover (DE)
(74) Vertreter: Continental Corporation

(56) Entgegenhaltungen:
- EP-A1- 2 730 435
- EP-A1- 3 409 508
- EP-A1- 3 613 614
- EP-A1- 3 725 557
- JP-B2- 5 461 161

## Beschreibung

Die Erfindung betrifft einen Fahrzeugreifen mit einer aerodynamisch vorteilhaften Oberflächenstruktur sowie ein Verfahren zur Herstellung eines entsprechenden Fahrzeugreifens. Offenbart werden zudem eine Vulkanisationsform für den Einsatz in einem entsprechenden Verfahren und die Verwendung einer Vielzahl von spezifischen Strukturelementen zur Verbesserung der aerodynamischen Eigenschaften eines Fahrzeugreifens.

In Folge eines steigenden Bewusstseins für die Notwendigkeit eines nachhaltigeren Umgangs mit fossilen Brennstoffen und der Reduktion von Treibhausgasemissionen, besteht in den letzten Jahren ein stetes Interesse daran, den Kraftstoffverbrauch von Fahrzeugen zu minieren. Hierbei konnten in den letzten Jahren insbesondere durch den Einsatz von modernen Fahrzeugreifen signifikante Erfolge erzielt werden. Im Bereich der Fahrzeugreifen fokussiert sich die Entwicklungsarbeit zur Reduktion des Kraftstoffverbrauchs dabei in großen Teilen auf die Optimierung des Rollwiderstandes, wobei in der Vergangenheit insbesondere die Ausgestaltung des Laufstreifens und der Innenaufbau des Fahrzeugreifens im Fokus der Entwicklung standen. Die aerodynamischen Eigenschaften von Fahrzeugreifen bzw. deren Beitrag zum Gesamtströmungswiderstand eines Fahrzeugs wurden hingegen in vielen Anwendungsbereiche, insbesondere im Bereich der PKW-Reifen, eher wenig beachtet. Im Gegensatz hierzu ist die Minimierung des Strömungswiderstands von Fahrzeugkarosserien, wie sie beispielsweise im Windkanal erfolgen kann, heutzutage längst nicht mehr nur dem Motorsport vorbehalten. Beim Einsatz von Fahrzeugreifen am Fahrzeug werden diese jedoch regelmäßig nicht vollständig von der Fahrzeugkarosserie umschlossen, so dass auch die Reifenseitenwände und Reifenschultern vom Fahrtwind umströmt werden und dadurch zum aerodynamischen Gesamtprofil des Fahrzeugs beitragen.

Auch wenn grundsätzlich der Laufstreifen eines Fahrzeugreifens besonders maßgeblich für die Fahreigenschaften eines Fahrzeugreifens ist, haben auch die Oberflächenbeschaffenheit und Oberflächenstruktur der Reifenseitenwände und der Reifenschulter einen Einfluss auf den Strömungswiderstand von Fahrzeugreifen. Trotz dieses Umstandes werden die Reifenseitenwände bzw. die Reifenschultern heutzutage vor allem zu Kennzeichnungszwecken, beispielsweise für Angaben zum Reifenhersteller und/oder Reifentyp, genutzt oder mit Verzierungen versehen, die primär dem Zweck dienen, das Erscheinungsbild zu beeinflussen.

Solche Kennzeichnungen bzw. Verzierungen werden dabei zumeist über Oberflächenstrukturierungen im Gummi mit Erhebungen und/oder Vertiefungen in den entsprechenden Bereichen des Fahrzeugreifens realisiert, wobei diese bei der Herstellung der Fahrzeugreifen zumeist über eine komplementäre Vulkanisationsform in die Fahrzeugreifenrohlinge eingeprägt werden. Im Stand der Technik sind zahlreiche Oberflächenstrukturierungen auf Fahrzeugreifen bekannt, die in vielen Fällen durch das Anordnen von Rillenstrukturen erreicht werden, wie es beispielsweise in der US 10105995 B2, der US 2020/070591 A1 und der JP 5789274 B2 offenbart wird. Entsprechende Oberflächenstrukturierungen sind allerdings regelmäßig lediglich auf die Umsetzung von optischen Merkmalen ausgelegt und haben zumeist keinen positiven Nutzen für die Aerodynamik des Fahrzeugreifens bzw. dienen nicht einer bewussten Verbesserung der aerodynamischen Eigenschaften.

Der weitere Stand der Technik wird gebildet durch die EP 2 730 435 A1: Daraus bekannt sind aerodynamische Fahrzeugreifen-Strukturbereiche mit in Mulden angeordneten umlaufenden Erhebungen.

Aus anderen Bereichen, beispielsweise der Luft- und Schifffahrt, ist bekannt, dass glatte Oberflächen in Bezug auf aerodynamische Effekte einer strukturierten Oberfläche nicht zwangsläufig vorzuziehen sind. So sind in den vergangenen Jahren mit strukturierten Oberflächen signifikante Verbesserungen im Strömungswiderstand erzielt worden, indem beispielsweise die Natur als Vorbild genutzt wurde. Hierbei konnte beispielsweise durch die Verwendung von durch Haifischschuppen inspirierten Oberflächenstrukturen, sogenannten "Riblet-Folien", an der Oberfläche von Flugzeugen und/oder an dem Rumpf von Schiffen eine signifikante Reduktion von Strömungswiderständen erzielt werden.

Umgekehrt kann eine aerodynamisch unvorteilhafte Oberflächenstrukturierung, beispielsweise in Folge einer lediglich auf optische Aspekte fokussierten Strukturierung, dazu führen, dass der Strömungswiderstand, der sich aus dem Druckwiderstand und Reibungswiderstand zusammensetzt, des entsprechenden Gegenstandes in unvorteilhafter Weise erhöht wird.

Vor diesem Hintergrund wurde vereinzelt versucht, die aerodynamischen Eigenschaften von Fahrzeugreifen durch eine gezielte Oberflächenstrukturierung im Bereich der Reifenseitenwand bzw. Reifenschulter zu verbessern bzw. zumindest den negativen Einfluss von Kennzeichnungen und Verzierungen zu minimieren. Die aerodynamischen Effekte der aus dem Stand der Technik bisher bekannten Lösungen werden dabei jedoch in vielen Fällen als unzureichend empfunden. Darüber hinaus sind die aus dem Stand der Technik zu diesem Zweck bekannten Strukturierungen zumeist aufwendig bzw. kostenintensiv in der Herstellung, da sie beispielsweise mit technisch komplexen Werkzeugen in die Vulkanisationsform eingebracht werden müssen und/oder da sie zur Erzielung des gewünschten Effektes weitere Arbeitsschritte erfordern.

Die primäre Aufgabe der vorliegenden Erfindung war es, die vorstehend beschriebenen Nachteile des Standes der Technik auszuräumen oder zumindest zu verringern.

Insbesondere war es die Aufgabe der vorliegenden Erfindung, einen Fahrzeugreifen anzugeben, welcher im Vergleich zum Stand der Technik verbesserte aerodynamische Eigenschaften aufweist, sodass insbesondere der Strömungswiderstand des anzugebenden Fahrzeugreifens beim Einsatz am Fahrzeug minimiert wird und entsprechend insbesondere im Vergleich zu herkömmlichen Fahrzeugreifen niedriger ausfallen sollte.

Hierbei war es eine Vorgabe, dass die Reduktion des Strömungswiderstandes des anzugebenden Fahrzeugreifens durch eine Veränderung der Oberflächenbeschaffenheit in der Reifenseitenwand und/oder Reifenschulter des anzugebenden Fahrzeugreifens erreicht werden sollte.

Insoweit war es eine ergänzende Aufgabe der vorliegenden Erfindung, dass die resultierende Oberfläche der anzugebenden Fahrzeugreifen bei einem vorteilhaften Einfluss auf die aerodynamischen Eigenschaften trotzdem eine größtmögliche kennzeichnungstechnische und designerische Freiheit erlauben sollte. Entsprechend sollte der anzugebende Fahrzeugreifen insbesondere den Zielkonflikt aus einer optisch ansprechenden Oberflächenstrukturierung und verbesserten aerodynamischen Eigenschaften bestmöglich lösen.

Es war eine zusätzliche Aufgabe der Erfindung, dass die Herstellung des anzugebenden Fahrzeugreifens besonders zeit- und kosteneffizient möglich sein sollte, wobei die Oberflächenstrukturierung bevorzugt direkt im Vulkanisationsprozess anbringbar sein sollte.

Zudem war es eine Aufgabe der vorliegenden Erfindung, ein Verfahren zur Herstellung eines entsprechenden Fahrzeugreifens anzugeben.

Darüber hinaus war es eine sekundäre Aufgabe der vorliegenden Erfindung eine Verwendung einer Vielzahl von Strukturelementen zur Verbesserung der aerodynamischen Eigenschaften eines Fahrzeugreifens anzugeben.

Abschließend war es eine sekundäre Aufgabe der vorliegenden Erfindung, eine Vulkanisationsform zur Herstellung von entsprechenden Fahrzeugreifen, insbesondere für den Einsatz in dem anzugebenden Verfahren, anzugeben.

Der Erfinder hat nunmehr erkannt, dass sich die vorstehend beschriebenen Aufgaben überraschenderweise lösen lassen, wenn eine Vielzahl von spezifischen Strukturelementen in einem Strukturbereich der Reifenschulter und/oder der Reifenseitenwand angeordnet werden, wobei die Strukturelemente jeweils zumindest drei ineinander verschachtelte, umlaufende Erhebungen aufweisen, welche voneinander jeweils durch rillenartigen Ausnehmungen getrennt sind und deren Höhe relativ zu der Tiefe der umfassten Ausnehmungen sich voneinander unterscheidet, wie es in den Ansprüchen definiert ist. Hierdurch kann überraschenderweise eine aerodynamisch besonders vorteilhafte Oberflächenstruktur erhalten werden, welche vorteilhafterweise den Strömungswiderstand des Fahrzeugreifens minimiert, wobei die Herstellung entsprechender Fahrzeugreifen vorteilhafterweise auch besonders zeit- und kosteneffizient möglich ist.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Der Fachmann versteht insoweit, dass insbesondere solche Ausführungsformen bevorzugt sind, die zwei oder mehr Merkmale aufweisen, die auch in den Figuren für die besonders bevorzugten Beispiele gezeigt sind. Merkmale bevorzugter Verfahren, Verwendungen und Vulkanisationsformen ergeben sich aus den Merkmalen bevorzugter Fahrzeugreifen.

Die Erfindung betrifft einen Fahrzeugreifen, umfassend im Bereich zumindest einer Reifenschulter und/oder zumindest einer Reifenseitenwand, einen Strukturbereich, wobei der Strukturbereich eine Vielzahl von an der Oberfläche des Fahrzeugreifens angeordneten Strukturelementen umfasst,

wobei die Strukturelemente jeweils eine umlaufende erste Erhebung mit einer ersten Plateaufläche, eine die erste Erhebung umgebende umlaufende zweite Erhebung mit einer zweiten Plateaufläche und eine die zweite Erhebung umgebende umlaufende dritte Erhebung mit einer dritten Plateaufläche umfassen,

wobei die erste Erhebung eine Ausnehmung mit einer ersten Bodenfläche umgibt, wobei die zweite Erhebung von der ersten Erhebung durch ein umlaufendes Rillenelement mit einer zweiten Bodenfläche abgegrenzt ist, wobei die dritte Erhebung von der zweiten Erhebung durch ein umlaufendes Rillenelement mit einer dritten Bodenfläche abgegrenzt ist, wobei:
- H₁ der mittlere Höhenunterschied zwischen der ersten Plateaufläche und der ersten Bodenfläche ist,
- H₂ der mittlere Höhenunterschied zwischen der zweiten Plateaufläche und der zweiten Bodenfläche ist,
- H₃ der mittlere Höhenunterschied zwischen der dritten Plateaufläche und der dritten Bodenfläche ist, und
wobei innerhalb jedes Strukturelements H₁, H₂ und H₃ voneinander verschieden sind.

Beispielhaft ist dabei ein erfindungsgemäßer Fahrzeugreifen, wobei der Fahrzeugreifen ein PKW- oder LKW-Reifen, bevorzugt ein PKW-Reifen, ist. Für die meisten Fälle relevant ist ein erfindungsgemäßer Fahrzeugreifen, wobei der Fahrzeugreifen ein Fahrzeugluftreifen ist. Für die meisten Fälle relevant ist auch ein erfindungsgemäßer Fahrzeugreifen, wobei der Fahrzeugreifen einen Laufstreifen aufweist, wobei der Laufstreifen ein Profil aufweist.

Der erfindungsgemäße Fahrzeugreifen umfasst im Bereich der Reifenschulter und/oder der Reifenseitenwand einen Strukturbereich, d.h. zumindest einen Bereich der Reifenoberfläche, in dem die Strukturelemente angeordnet sind. Grundsätzlich kann ein Strukturbereich dabei entweder ausschließlich an der Reifenschulter oder an der Reifenseitenwand angeordnet werden. Es ist allerdings ebenfalls möglich, einen einzelnen Strukturbereich sowohl an der Reifenseitenwand als auch an der Reifenschulter anzuordnen, sodass der Strukturbereich beide Bereiche zumindest teilweise bedeckt. Bevorzugt ist allerdings ein erfindungsgemäßer Fahrzeugreifen, wobei der Fahrzeugreifen den Strukturbereich im Bereich zumindest einer Reifenseitenwand, bevorzugt beider Reifenseitenwände, umfasst.

Im Einklang mit dem fachmännischen Verständnis kann der erfindungsgemäße Fahrzeugreifen eine Vielzahl von Strukturbereichen umfassen, wobei nach Einschätzung des Erfinders eine größere Zahl von Strukturbereichen vorteilhafte aerodynamische Eigenschaften begünstigt, da dies regelmäßig eine größere Flächenbelegung ermöglicht und gleichzeitig die Option offenhält, zwischen den Strukturbereichen Kennzeichnungen oder Verzierungen vorzusehen. In einer besonders bevorzugten Ausführungsform verteilen sich diese Strukturbereiche gleichmäßig über den Fahrzeugreifen, wodurch ein gleichmäßigeres Strömungsverhalten erreicht werden kann, insbesondere wenn die verschiedenen Strukturbereich hinsichtlich der Abmessungen und der Ausführung der Strukturelement ähnlich ausgelegt werden. In dieser Ausgestaltung wird die Vielzahl an Strukturbereichen bevorzugt durch eine Vielzahl von Kennzeichnungsbereichen getrennt, d.h. Bereichen der Seitenwand, in denen eine Kennzeichnung oder Verzierung angeordnet ist, die nicht primär der Verbesserung der aerodynamischen Eigenschaften dient. Insofern orientiert sich hierbei die Anzahl an Strukturbereichen zweckmäßigerweise an der Anzahl an Kennzeichnungsbereichen, sodass die Reifenseitenwand und/oder die Reifenschulter bevorzugt im Wesentlichen vollständig von den Strukturbereichen und den Kennzeichnungsbereichen bedeckt wird. Bevorzugt ist entsprechend ein erfindungsgemäßer Fahrzeugreifen, wobei der Fahrzeugreifen zwei oder mehr, bevorzugt vier oder mehr, besonders bevorzugt sechs oder mehr separate Strukturbereiche umfasst, die über die zumindest eine Reifenseitenwand und/oder Reifenschulter verteilt angeordnet sind, wobei die Strukturbereiche bevorzugt durch Kennzeichnungsbereiche voneinander getrennt sind, die der Kennzeichnung des Fahrzeugreifens dienen, insbesondere mit Herstellerangaben, Warnhinweisen oder Produktinformationen.

Wie vorstehend erläutert, ist es nach Einschätzung des Erfinders für die Optimierung der aerodynamischen Eigenschaften zielführend, die Belegung der Reifenoberfläche mit den vorteilhaften Strukturbereichen auch möglichst umfassend vorzusehen, um die positiven Effekte der Oberflächenstrukturierung möglichst umfassend auszunutzen, und dabei entsprechend die Ausdehnung der Strukturbereiche in Umfangsrichtung und in radiale Richtung möglichst groß zu wählen. Bevorzugt ist demnach ein erfindungsgemäßer Fahrzeugreifen, wobei der kombinierte Flächenanteil sämtlicher Strukturbereiche auf einer Reifenseitenwand oder Reifenschulter 10 % oder mehr, bevorzugt 20 % oder mehr, besonders bevorzugt 30 % oder mehr, beträgt, bezogen auf die Oberfläche der Reifenseitenwand oder Reifenschulter. Bevorzugt ist ebenfalls ein erfindungsgemäßer Fahrzeugreifen, wobei sich zumindest ein Strukturbereich, bevorzugt sämtliche Strukturbereiche, entlang der Umfangsrichtung über 10 % oder mehr, bevorzugt 15 % oder mehr, besonders bevorzugt 20 % oder mehr, des Reifenumfangs, erstrecken. Bevorzugt ist zusätzlich oder alternativ auch ein erfindungsgemäßer Fahrzeugreifen, wobei sich zumindest ein Strukturbereich, bevorzugt sämtliche Strukturbereiche, zumindest abschnittsweise, bevorzugt über die gesamte Länge in Umfangsrichtung, entlang der radialen Richtung des Fahrzeugreifens über 20 % oder mehr, bevorzugt 30 % oder mehr, besonders bevorzugt 40 % oder mehr, der Reifenhöhe, erstrecken, wobei die Reifenhöhe der Abstand zwischen der Unterkante der Reifenwulst und der Oberfläche des Laufstreifens ist.

Erfindungsgemäß umfasst der Strukturbereich eine Vielzahl von an der Oberfläche angeordneten Strukturelementen. Bevorzugt ist insoweit ein erfindungsgemäßer Fahrzeugreifen, wobei zumindest ein Strukturbereich, bevorzugt sämtliche Strukturbereiche, zehn oder mehr, bevorzugt zwanzig oder mehr, besonders bevorzugt 30 oder mehr, Strukturelemente umfasst, wobei prinzipiell auch Strukturbereiche mit mehreren hundert Strukturelementen denkbar sind.

Der Fachmann versteht, dass die Strukturelemente zwar theoretisch auch auf der Reifenoberfläche befestigt werden könnten, beispielsweise mittels eines Klebstoffes, dass dies in der Praxis jedoch keine übermäßige Relevanz haben dürfte. Vielmehr ist für im Wesentlichen alle Ausführungsformen ein erfindungsgemäßer Fahrzeugreifen relevant, wobei die Strukturelemente Bestanteil der Reifenschulter oder der Reifenseitenwand sind bzw. wobei die Strukturelemente durch eine Strukturierung der Oberfläche des Fahrzeugreifens gebildet werden, so dass die Strukturelemente im Wesentlichen aus dem gleichen Material, insbesondere einem Gummiwerkstoff, bestehen, wie die Reifenschulter bzw. die Reifenseitenwand.

Die Strukturelemente können grundsätzlich innerhalb des Strukturbereichs zufällig verteilt angeordnet sein und definieren in diesem Fall durch die Einhüllende um alle Strukturelemente den Strukturbereich. Es ist ebenfalls möglich, dass die Strukturelemente innerhalb des Strukturbereichs ungleichmäßig verteilt vorliegen, so dass es Unterschiede in der Belegungsdichte gibt. Dies ist insbesondere dann notwendig, wenn der Strukturbereich abgesehen von den Strukturelementen noch weitere Elemente enthält, beispielsweise im Strukturbereich angeordnete Kennzeichnungselemente. Es ist allerdings in allen Fällen bevorzugt, wenn der Strukturbereich möglichst weitgehend von Strukturelementen bedeckt ist. Bevorzugt ist deshalb ein erfindungsgemäßer Fahrzeugreifen, wobei die Strukturelemente in zumindest einem Strukturbereich, bevorzugt in sämtlichen Strukturbereichen, so angeordnet sind, dass die Strukturelemente im Strukturbereich einen kombinierten Flächenanteil von 80 % oder mehr, bevorzugt von 90 % oder mehr, besonders bevorzugt von im Wesentlichen 100 %, aufweisen, bezogen auf die Fläche des Strukturbereichs.

In sämtlichen Ausführungsformen ist es bevorzugt, wenn die Strukturelemente innerhalb des Strukturbereichs regelmäßig angeordnet sind, wobei die Abstände zwischen den Elementen für eine besonders wirksame Belegungsdichte nach Einschätzung der Erfinder nicht zu groß gewählt werden sollten. Bevorzugt ist also ein erfindungsgemäßer Fahrzeugreifen, wobei die Strukturelemente in zumindest einem Strukturbereich, bevorzugt in sämtlichen Strukturbereichen, in einem regelmäßigen Muster angeordnet sind. Bevorzugt ist entsprechend auch ein erfindungsgemäßer Fahrzeugreifen, wobei die Mittelpunkte am nächsten benachbarter Strukturelemente einen Abstand im Bereich von 0,7*A bis 1,3*A, bevorzugt im Bereich von 0,8*A bis 1,2*A, besonders bevorzugt im Bereich von 0,9*A bis 1,1*A, aufweisen, wobei A der mittlere Abstand der Mittelpunkte am nächsten benachbarter Strukturelemente ist, wobei die Mittelpunkte am nächsten benachbarter Strukturelemente bevorzugt im Wesentlichen äquidistant zueinander angeordnet sind.

In Bezug auf die Anordnung der Strukturelemente hat es sich im Lichte der vorstehenden Ausführungen bezüglich einer möglichst dichten Packung der Strukturelemente zudem als vorteilhaft erwiesen, wenn diese zumindest teilweise auf Stoß aneinander angeordnet sind. Bevorzugt ist deshalb ein erfindungsgemäßer Fahrzeugreifen, wobei die Strukturelemente in zumindest einem Strukturbereich, bevorzugt in sämtlichen Strukturbereichen, zumindest teilweise, bevorzugt überwiegend, besonders bevorzugt im Wesentlichen vollständig, auf Stoß mit weiteren Strukturelementen angeordnet sind, so dass die äußeren umlaufenden Erhebungen der auf Stoß angeordneten Strukturelemente zumindest abschnittsweise nicht durch eine Vertiefung voneinander abgegrenzt sind.

Um eine möglichst vollständige Abdeckung des Strukturbereichs zu erreichen, kann es grundsätzlich vorteilhaft sein, für die Strukturelemente im Strukturbereich voneinander verschiedene geometrische Formen vorzusehen. Für die meisten Fälle ist es allerdings sinnvoll, die Strukturelemente im Wesentlichen gleichartig und symmetrisch auszuführen, da hiermit nach Einschätzung des Erfinders besonders günstige aerodynamische Eigenschaften erzielt werden können. Bevorzugt ist deshalb ein erfindungsgemäßer Fahrzeugreifen, wobei die Strukturelemente in zumindest einem Strukturbereich, bevorzugt in sämtlichen Strukturbereichen, zu 50 % oder mehr, bevorzugt zu 70 % oder mehr, besonders bevorzugt zu 90 % oder mehr, ganz besonders bevorzugt im Wesentlichen vollständig, die gleiche geometrische Grundform und Grundanordnung aufweisen, so dass die Strukturelemente hinsichtlich ihrer Größe so skaliert werden können, dass im Wesentlichen identisch ausgeführte Strukturelemente erhalten werden. Bevorzugt ist zusätzlich oder alternativ auch ein erfindungsgemäßer Fahrzeugreifen, wobei die Strukturelemente zumindest teilweise, bevorzugt überwiegend, besonders bevorzugt sämtlich, symmetrisch sind, bevorzugt spiegelsymmetrisch an zumindest zwei Spiegelebenen und/oder Cₙ-rotationssymmetrisch, wobei n größer ist als 2. In Übereinstimmung mit dem fachmännischen Verständnis bedeutet die vorstehende Definition der gleichen geometrischen Grundform und Grundanordnung, dass sich die Strukturelemente im Wesentlichen nur durch die Skalierung unterscheiden.

Erfindungsgemäß umfassen die Strukturelemente jeweils eine um eine Ausnehmung herumlaufende erste Erhebung, eine diese umschließende zweite Erhebung und eine diese umschließende dritte Erhebung, wobei die Erhebungen jeweils durch Rillenelemente voneinander getrennt werden. Die Strukturelemente umfassen somit zumindest drei ineinander angeordnete, d.h. ineinander verschachtelte, umlaufende Oberflächenerhebungen, die abgesehen von ihrer spezifischen Form und relativen Anordnung in vielen Bereichen mit üblichen Schraffuren vergleichbar sind, wie sie auch zur Kennzeichnung verwendet werden. Wie nachfolgend erläutert, können jedoch auch weitere umlaufende Erhebungen vorgesehen werden, die dann wiederum durch ein Rillenelement von den weiter innen liegenden Erhebungen getrennt sind. Die Erhebungen umfassen an ihrer Spitze jeweils eine Plateaufläche, sind also abgeflacht, und die Rillenelemente bzw. die Ausnehmung eine Bodenfläche, die an deren tiefsten Punkt verläuft. In Übereinstimmung mit dem fachmännischen Verständnis bedeutet der Ausdruck "umlaufend", dass die Elemente jeweils in sich im Wesentlichen geschlossene, ringartige Elemente darstellen, die die weiter innenliegenden Elemente jeweils im Wesentlichen vollständig umgeben. Hierbei versteht der Fachmann, dass kleine Abweichungen von einer perfekten Umfassung, welche sich beispielsweise aus Fertigungsfehlern ergeben können, beispielsweise durch herstellungsbedingte Lückendefekte in einer umlaufenden Erhebung, keinen Einfluss darauf nehmen, dass ein Element als umlaufendes Element angesehen wird. Ein Element wird erfindungsgemäß in jedem Fall dann als umlaufend angesehen, wenn es das von ihm umgebene Element zu 98 % oder mehr, bevorzugt zu 99 % oder mehr, besonders bevorzugt zu 99,5 % oder mehr, ganz besonders bevorzugt zu 99 % oder mehr, umgibt, bezogen auf den Umfang des umgebenen Elements.

Mit Blick auf die vorstehenden Ausführungen, insbesondere hinsichtlich der symmetrischen Ausführungen der Strukturelemente, ist es explizit bevorzugt, wenn sämtliche Plateauflächen eine gleichsinnig ähnliche geometrische Form aufweisen, sodass sie durch zentrische Streckung ineinander überführt werden können. Dies bedeutet beispielsweise, dass die drei Erhebungen sämtlich eine hexagonale Form aufweisen und als drei Hexagone unterschiedlicher Größe ineinander verschachtelt vorliegen. Hierdurch wird eine besonders gleichmäßige Oberflächenstruktur erhalten, die nach Einschätzung des Erfinders einen besonders günstigen Einfluss auf die aerodynamischen Eigenschaften der Fahrzeugreifen hat. Bevorzugt ist demgemäß ein erfindungsgemäßer Fahrzeugreifen, wobei die erste Plateaufläche und die zweite Plateaufläche und die dritte Plateaufläche, bevorzugt auch sämtliche weitere Plateauflächen im Strukturelement, Außenumrisse aufweisen, die durch zentrische Streckung ineinander überführt werden können. Bevorzugt ist gleichfalls ein erfindungsgemäßer Fahrzeugreifen, wobei die erste Bodenfläche und die zweite Bodenfläche und die dritte Bodenfläche, bevorzugt auch sämtliche weitere Bodenflächen im Strukturelement, Außenumrisse aufweisen, die durch zentrische Streckung ineinander überführt werden können.

Darüber hinaus ist es ebenfalls vorteilhaft, wenn die erste Erhebung, die zweite Erhebung und die dritte Erhebung um einen gemeinsamen Mittelpunkt herum, d.h. konzentrisch, angeordnet sind. Entsprechend fallen die geometrischen Mittelpunkte der ersten Plateaufläche, der zweiten Plateaufläche und der dritten Plateaufläche wie auch die geometrischen Mittelpunkte der ersten Bodenfläche, der zweiten Bodenfläche und der dritten Bodenfläche in dieser Ausführungsform auf denselben Punkt. Bevorzugt ist somit ein erfindungsgemäßer Fahrzeugreifen, wobei die erste Erhebung, die zweite Erhebung und die dritte Erhebung im Wesentlichen konzentrisch zueinander angeordnet sind.

Grundsätzlich können die Erhebungen mit unterschiedlichen Querschnittsprofilen orthogonal zur Umlaufrichtung ausgeführt werden, beispielsweise mit polygonförmigen Querschnittsprofilen. Insbesondere bei einem polygonförmigen Querschnittsprofil weisen die Erhebungen vorteilhafterweise zumindest eine, bevorzugt zwei, schräge Seitenwände auf. In diesem Fall haben nämlich sämtliche Erhebungen in der Querschnittsansicht eine geometrische Form, welche einem gleichschenkligen Trapez entspricht, was nach Einschätzung der Erfinder einen vorteilhaftes Anströmverhalten der Strukturelemente begünstigt. Bevorzugt ist entsprechend ein erfindungsgemäßer Fahrzeugreifen, wobei die erste Erhebung und/oder die zweite Erhebung und/oder die dritte Erhebung, bevorzugt sämtliche Erhebungen, eine Seitenwand aufweisen, die relativ zu der entsprechenden Bodenfläche mit einer Steigung im Bereich von 35° bis 90°, bevorzugt im Bereich von 45° bis 80°, besonders bevorzugt im Bereich von 55° bis 70°, verläuft. Bevorzugt ist demnach ein erfindungsgemäßer Fahrzeugreifen, wobei die erste Erhebung und/oder die zweite Erhebung und/oder die dritte Erhebung, bevorzugt sämtliche Erhebungen, quer zur Mittellinie eine viereckige Querschnittsfläche, bevorzugt eine rechteckige oder trapezförmige Querschnittsfläche, besonders bevorzugt eine trapezförmige Querschnittsfläche, aufweisen.

Bezüglich der weiteren Ausgestaltung der Strukturelemente, hat der Erfinder Abmessungen identifiziert, welche sich in der Praxis als besonders vorteilhaft erwiesen haben. Insoweit ist es in Bezug auf die aerodynamischen Eigenschaften der Strukturelemente vorteilhaft, wenn sämtliche Plateauflächen sowie sämtliche Bodenflächen möglichst wenig Variationen in ihren Abmessungen aufweisen. Selbiges gilt auch für die Öffnungsbreite der Rillenelemente. Bevorzugt ist entsprechend ein erfindungsgemäßer Fahrzeugreifen, wobei die erste Erhebung und/oder die zweite Erhebung und/oder die dritte Erhebung, bevorzugt sämtliche Erhebungen, Plateauflächen aufweisen, deren mittlere Stegbreite quer zur Mittellinie im Bereich von 0,01 bis 1,0 mm, bevorzugt im Bereich von 0,02 bis 0,5 mm, besonders bevorzugt im Bereich von 0,05 bis 0,25 mm, liegt. Bevorzugt ist auch ein erfindungsgemäßer Fahrzeugreifen, wobei die erste Erhebung und/oder die zweite Erhebung und/oder die dritte Erhebung, bevorzugt sämtliche Erhebungen, Plateauflächen aufweisen, deren Stegbreite quer zur Mittellinie über den gesamten Umfang um 10 % oder weniger, bevorzugt 5 % oder weniger, besonders bevorzugt 1 % oder weniger, variiert. Bevorzugt ist insoweit ebenfalls ein erfindungsgemäßer Fahrzeugreifen, wobei die Rillenelemente innerhalb eines Strukturelements, bevorzugt über alle Strukturelemente, eine Öffnungsbreite quer zur Mittellinie aufweisen, die über den gesamten Umfang um 10 % oder weniger, bevorzugt 5 % oder weniger, besonders bevorzugt 1 % oder weniger, variiert, wobei die die Rillenelemente bevorzugt die gleiche mittlere Öffnungsbreite aufweisen.

Erfindungsgemäß bezeichnet H₁ den Höhenunterschied zwischen der ersten Plateaufläche und der ersten Bodenfläche. Entsprechend bezeichnen H₂ bzw. H₃ die Höhenunterschiede zwischen der zweiten bzw. dritten Plateaufläche und der entsprechenden zweiten bzw. dritten Bodenfläche. H₁, H₂ und H₃ werden als mittlerer Höhenunterschied angegeben, d.h. als Differenz zwischen der mittleren Höhe der jeweiligen Plateaufläche und der mittleren Höhe der jeweiligen Bodenfläche. Die Höhendifferenz wird dabei in Übereinstimmung mit dem Fachmännischen Verständnis entlang der Achse bestimmt, die im Bereich des Strukturelements orthogonal zu der Oberfläche des Fahrzeugreifens steht.

Erfindungsgemäß sind die Höhenunterschiede H₁, H₂ und H₃ in jedem Strukturelement voneinander verschieden. Verschiedene Strukturelemente innerhalb desselben Strukturbereichs können dabei unterschiedliche H₁, H₂ und H₃ aufweisen, sodass innerhalb eines einzigen Strukturbereichs zumindest theoretisch jedes Strukturelement unterschiedliche Höhenunterschiede aufweisen kann.

Mit Blick auf eine möglichst gleichmäßig Oberflächenstrukturierung und ein möglichst homogenes Anströmverhalten ist es nach Einschätzung der Erfinder vorteilhaft, wenn der Einfluss der Mittelung auf diese Werte niedrig ist, da die Rillen und Erhebungen hinsichtlich der Höhe bzw. Tiefe weitgehend gleichmäßig ausgeführt werden. Bevorzugt ist somit ein erfindungsgemäßer Fahrzeugreifen, wobei der Höhenunterschied zwischen der ersten Plateaufläche und der ersten Bodenfläche über den gesamten Umfang des Strukturelements um 10 % oder weniger, bevorzugt 5 % oder weniger, besonders bevorzugt 1 % oder weniger, variiert. Bevorzugt ist zusätzlich oder alternativ ein erfindungsgemäßer Fahrzeugreifen, wobei der Höhenunterschied zwischen der zweiten Plateaufläche und der zweiten Bodenfläche über den gesamten Umfang des Strukturelements um 10 % oder weniger, bevorzugt 5 % oder weniger, besonders bevorzugt 1 % oder weniger, variiert. Bevorzugt ist darüber hinaus zusätzlich oder alternativ ein erfindungsgemäßer Fahrzeugreifen, wobei der Höhenunterschied zwischen der dritten Plateaufläche und der dritten Bodenfläche über den gesamten Umfang des Strukturelements um 10 % oder weniger, bevorzugt 5 % oder weniger, besonders bevorzugt 1 % oder weniger, variiert.

Der Erfinder hat mit Blick auf die Abmessungen der Strukturelemente besonders geeignete Größenbereiche identifiziert, mit welchen sich die Vorteile der vorliegenden Erfindung besonders gut zeigen. Es hat sich nämlich in Bezug auf die aerodynamischen Eigenschaften der Strukturbereiche als vorteilhaft erwiesen, die Strukturelemente, insbesondere im Vergleich zu typischen Kennzeichnungen in Kennzeichnungsbereichen, relativ klein auszuführen, sodass die Strukturelemente idealerweise eine Größe von etwa 4 bis 5,5 mm aufweisen. Bevorzugt ist insofern ein erfindungsgemäßer Fahrzeugreifen, wobei die Strukturelemente zumindest teilweise, bevorzugt überwiegend, besonders bevorzugt sämtlich, eine Elementgröße im Bereich von 3 bis 8,5 mm, bevorzugt im Bereich von 3,5 bis 7 mm, besonders bevorzugt im Bereich von 4 bis 5,5 mm, aufweisen, wobei die Elementgröße der größte Abstand zwischen zwei Punkten auf dem Außenumriss der Plateaufläche der äußersten Erhebung ist. Die Bestimmung der Elementgröße ist für den Fachmann dabei zwanglos möglich. Die Elementgröße entspricht beispielsweise bei einem kreisförmigen Strukturelement dem Durchmesser, bei einem Viereck der Diagonalen und bei einem Hexagon dem Abstand zwischen zwei gegenüberliegenden Ecken.

Als besonders vorteilhafte Weiterentwicklung der vorstehend offenbarten Anordnung der Strukturelemente auf Stoß mit anderen Strukturelementen, schlägt der Erfinder vor, dass sich die Strukturelemente in den Außenbereichen überschneiden können und dabei sogar die äußerste Erhebung abschnittsweise teilen können. Dies bedeutet, dass eine Erhebungsabschnitt im Strukturbereich zwei verschiedenen Strukturelementen zugeordnet werden kann, in deren äußerer Erhebung der Erhebungsabschnitt einen Teil bildet. In diesem Fall entsteht eine Oberflächenstrukturierung, in der sich die positiven Effekte des erfindungsgemäß vorzusehenden Strukturbereichs besonders gut entfalten können, wobei insbesondere eine sehr dichte Oberflächenbelegung erreichbar ist. Diese Ausgestaltung hat zudem den Vorteil, dass sie besonders leicht herzustellen ist, da sich entsprechende Vulkanisationsformen im Lichte einer vereinfachten Führung des Fräswerkzeuges besonders zeit- und kosteneffizient herstellen lassen, sodass sich hier ein synergistischer Effekt zwischen aerodynamischen Vorteilen und einer besonders einfachen Herstellung ergibt. Bevorzugt ist insoweit ein erfindungsgemäßer Fahrzeugreifen, wobei die Strukturelemente in zumindest einem Strukturbereich, bevorzugt in sämtlichen Strukturbereichen, zumindest teilweise, bevorzugt überwiegend, besonders bevorzugt im Wesentlichen vollständig, so nebeneinander angeordnet sind, dass die äußeren umlaufenden Erhebungen abschnittsweise durch die gleiche erhabene Struktur gebildet werden. Bevorzugt ist zudem ein erfindungsgemäße Fahrzeugreifen, wobei die Strukturelemente in zumindest einem Strukturbereich, bevorzugt in sämtlichen Strukturbereichen, zumindest teilweise, bevorzugt überwiegend, besonders bevorzugt im Wesentlichen vollständig so nebeneinander angeordnet sind, dass im Strukturbereich ein Verband aus einer Vielzahl von Strukturelementen erhalten wird, bei denen jeweils die äußere umlaufende Erhebung durch die gleiche erhabene Struktur gebildet wird.

Um angesichts der gekrümmten Form von Reifenseitenwänden auch bei dichten Packungen von Strukturelementen eine umfassende Flächenbelegung zu erreichen, schlägt der Erfinder vor, dass die Größe der Strukturelemente im Strukturbereich in radialer Richtung des Fahrzeugreifens variiert werden sollte. Eine ausgezeichnete Flächenbelegung konnte insbesondere dann erzielt werden, wenn die Strukturelemente, welche radial innenliegend angeordnet sind, kleiner sind als jene Strukturelemente, die radial außenliegend angeordnet sind. Die Variation in der Größe von innenliegenden Strukturelementen relativ zu außenliegenden Strukturelementen kann beispielsweise 5 % betragen. Dies bedeutet, dass bei innenliegenden Strukturelementen mit einer Größe von 5 mm die Größe von radial außenliegenden Strukturelementen in etwa 5,25 mm entspricht. Bevorzugt ist entsprechend ein erfindungsgemäßer Fahrzeugreifen, wobei sich zumindest ein Strukturbereich, bevorzugt sämtliche Strukturbereiche, entlang der Umfangsrichtung des Fahrzeugreifens erstrecken, wobei die Strukturelemente im Strukturbereich entlang der radialen Richtung unterschiedliche Abmessungen aufweisen, wobei die in radialer Richtung innenliegenden Strukturelemente bevorzugt kleiner sind als die in radialer Richtung außenliegenden Strukturelemente.

In einigen Ausgestaltungen des erfindungsgemäßen Fahrzeugreifens kann es vorteilhaft sein, in einem Teil der Strukturelemente, bevorzugt sämtlichen Strukturelementen, zusätzlich zu der ersten Erhebung, der zweiten Erhebung und der dritten Erhebung weitere Erhebungen vorzusehen. Diese Erhebungen sind entsprechend von den angrenzenden Erhebungen mit niedrigerer Nummerierung durch weitere umlaufende Rillenelemente abgegrenzt, wobei die vorstehenden Ausführungen zu den Ausgestaltungen der Erhebungen und Rillenelemente entsprechend zutreffen. Nach Einschätzung des Erfinders kommen für bestimmte Anwendungen beispielsweise Strukturelemente mit insgesamt sechs Erhebungen in Betracht. In den meisten Fällen bevorzugt sind allerdings solche Strukturelemente, welche genau drei umlaufende Erhebungen umfassen. Dies hat sich in der Praxis als besonders vorteilhaft erwiesen, um eine erfindungsgemäß aerodynamisch vorteilhafte Struktur zu erhalten und zugleich den Herstellungsaufwand zu minimieren. Für bestimmte Anwendungen bevorzugt ist insofern ein erfindungsgemäßer Fahrzeugreifen, wobei die Strukturelemente zumindest teilweise, bevorzugt überwiegend, besonders bevorzugt sämtlich, weitere umlaufende (n)-te Erhebungen mit weiteren (n)-ten Plateauflächen aufweisen, welche die (n-1)-te Erhebung umgeben, wobei jede (n)-te Erhebung von der (n-1)-ten Erhebung durch ein umlaufendes Rillenelement mit einer (n)-ten Bodenfläche abgegrenzt ist, wobei
- Hₙ der mittlere Höhenunterschied zwischen der (n)-ten Plateaufläche und der (n)-ten Bodenfläche ist,
wobei Hₙ bevorzugt innerhalb jedes Strukturelements von H₁, H₂ und H₃ verschieden ist, wobei Hₙ besonders bevorzugt größer ist als H₃, wobei Hₙ besonders bevorzugt größer ist als H_{(m<n)}. Besonders bevorzugt ist allerdings ein erfindungsgemäßer Fahrzeugreifen, wobei die Strukturelemente zumindest teilweise, bevorzugt überwiegend, besonders bevorzugt sämtlich, genau drei umlaufende Erhebungen umfassen.

Es kann als großer Vorteil der vorliegenden Erfindung angesehen werden, dass die Strukturelemente grundsätzlich eine große Vielzahl an möglichen unterschiedlichen geometrischen Formen aufweisen können, so dass beispielsweise auch bewusst unregelmäßige Außenumrisse gewählt werden können. Insoweit ist es dem Erfinder jedoch gelungen, besonders vorteilhafte Formen für die Strukturelemente zu identifizieren, wobei sich insbesondere mit Hexagonen bei einer guten Herstellbarkeit der Vulkanisationsform eine sehr gute Oberflächenbelegung der Strukturbereiche mit Strukturelementen erreichen lässt, wobei die gute Herstellbarkeit durch die beispielsweise im Vergleich mit runden Strukturen vereinfachte Führung der Fräswerkzeuge bedingt ist. Die Form der Erhebungen und der Rillenelemente ist dabei zweckmäßigerweise komplementär. Bevorzugt ist demgemäß ein erfindungsgemäßer Fahrzeugreifen, wobei die erste Plateaufläche und/oder die zweite Plateaufläche und/oder die dritte Plateaufläche, bevorzugt sämtliche Plateauflächen, einen Außenumriss aufweisen, dessen Form ausgewählt ist aus der Gruppe bestehend aus Polygonen und Ellipsen, bevorzugt ausgewählt ist aus der Gruppe bestehend aus Hexagonen, Vierecken und Kreisen, besonders bevorzugt ausgewählt ist aus der Gruppe bestehend aus Quadraten und Hexagonen, ganz besonders bevorzugt ausgewählt ist aus der Gruppe bestehend aus Hexagonen. Bevorzugt ist zusätzlich oder alternativ ebenso ein erfindungsgemäßer Fahrzeugreifen, wobei die erste Bodenfläche und/oder die zweite Bodenfläche und/oder die dritte Bodenfläche, bevorzugt sämtliche Bodenflächen, einen Außenumriss aufweisen, dessen Form ausgewählt ist aus der Gruppe bestehend aus Polygonen und Ellipsen, bevorzugt ausgewählt ist aus der Gruppe bestehend aus Hexagonen, Vierecken und Kreisen, besonders bevorzugt ausgewählt ist aus der Gruppe bestehend aus Quadraten und Hexagonen, ganz besonders bevorzugt ausgewählt ist aus der Gruppe bestehend aus Hexagonen.

Im erfindungsgemäßen Fahrzeugreifen sind die Höhenunterschiede H₁, H₂ und H₃, wie vorstehend erläutert, innerhalb eines Strukturelements unterschiedlich groß ausgebildet. Der Erfinder hat dabei erkannt, dass sich überraschenderweise besonders vorteilhafte aerodynamische Effekte ergeben, wenn sich H₁, H₂ und H₃, bezogen auf die ineinander verschachtelte Struktur, von Innen nach Außen sukzessive erhöhen, so dass die äußeren Erhebungen höher sind als die inneren Erhebungen. In diesem Fall entsteht eine besonders vorteilhafte grübchenartige Struktur, die in den Experimenten der Erfinder besonders vorteilhafte aerodynamische Eigenschaften zeigte. Ohne an diese Theorie gebunden sein zu wollen, wird angenommen, dass diese Grübchenstruktur und die resultierenden Effekte mit jenen vergleichbar sind, die sich für die spezifische Oberflächengestaltung eines Golfballs zeigen. Die sogenannten "dimples" in der Oberflächenstruktur des Golfballs sorgen nachweislich dafür, dass der Druckwiderstand (als Teil des gesamten Strömungswiderstandes) des Golfballs verringert wird. Für im Wesentlichen alle Ausführungsformen bevorzugt ist demnach ein erfindungsgemäßer Fahrzeugreifen, wobei innerhalb jedes Strukturelements H₁ kleiner ist als H₂, bevorzugt um 20 % oder mehr, besonders bevorzugt um 30 % oder mehr, ganz besonders bevorzugt um 40 % oder mehr. Für im Wesentlichen alle Ausführungsformen bevorzugt ist zusätzlich oder alternativ ebenso ein erfindungsgemäßer Fahrzeugreifen, wobei innerhalb jedes Strukturelements H₂ kleiner ist als H₃, bevorzugt um 10 % oder mehr, besonders bevorzugt um 20 % oder mehr, ganz besonders bevorzugt um 30 % oder mehr. Für im Wesentlichen alle Ausführungsformen ganz besonders bevorzugt ist ein erfindungsgemäßer Fahrzeugreifen, wobei innerhalb jedes Strukturelements gilt, dass H₁ < H₂ < H₃, wobei besonders bevorzugt gilt, dass die mittleren Höhenunterschiede zwischen der (n)-ten Plateufläche und der (n)-ten Bodenfläche mit steigendem (n) zunimmt, wobei insbesondere gilt Hₙ < H₍ₙ₊₁₎.

Für die Höhenunterschiede H₁, H₂ und H₃ haben die Erfinder besonders geeignete absolute Abmessungen identifiziert, unter welchen sich in der Praxis für typische Fahrzeugreifen die Vorteile der Erfindung besonders zuverlässig zeigen. Bevorzugt ist nämlich ein erfindungsgemäßer Fahrzeugreifen, wobei H₁ im Bereich von 0,05 bis 0,35 mm, bevorzugt im Bereich von 0,1 bis 0,3 mm, besonders bevorzugt im Bereich von 0,15 bis 0,25 mm, liegt. Bevorzugt ist zudem ein erfindungsgemäßer Fahrzeugreifen, wobei H₂ im Bereich von 0,25 bis 0,55 mm, bevorzugt im Bereich von 0,3 bis 0,5 mm, besonders bevorzugt im Bereich von 0,35 bis 0,45 mm, liegt. Bevorzugt ist darüber hinaus ein erfindungsgemäßer Fahrzeugreifen, wobei H₃ im Bereich von 0,45 bis 0,75 mm, bevorzugt im Bereich von 0,5 bis 0,7 mm, besonders bevorzugt im Bereich von 0,55 bis 0,65 mm, liegt.

In erfindungsgemäßen Fahrzeugreifen unterscheiden sich die Höhenunterschiede H₁, H₂ und H₃ in jedem der Strukturelemente jeweils voneinander. In den Versuchen des Erfinders hat sich gezeigt, dass sich dabei besonders vorteilhafte aerodynamische Eigenschaften ergeben, wenn sämtliche Bodenflächen relativ zueinander im Wesentlichen auf gleicher Höhe liegen. In der entsprechenden Ausgestaltung sind die erste Plateaufläche, die zweite Plateaufläche, die dritte Plateaufläche sowie weitere gegebenenfalls vorhandene Plateauflächen entsprechend jeweils auf unterschiedlichen Höhen angeordnet, um die notwendigen Unterschiede in Hₙ zu realisieren. Dies erleichtert nicht nur die Herstellbarkeit des entsprechenden Fahrzeugreifens über eine Vulkanisationsform, sondern führt auch dazu, dass die Reifenseitenwand und/oder die Reifenschulter, welche den Strukturbereich enthält, besonders gut entlüftet werden kann. Bevorzugt ist also ein erfindungsgemäßer Fahrzeugreifen, wobei die erste Bodenfläche und die zweite Bodenfläche und die dritte Bodenfläche, bevorzugt auch sämtliche weitere Bodenflächen im Strukturelement, relativ zueinander auf gleicher Höhe liegen, bezogen auf die orthogonal auf der Reifenoberfläche stehende Richtung. Bevorzugt ist demnach auch ein erfindungsgemäßer Fahrzeugreifen, wobei die erste Plateaufläche und die zweite Plateaufläche und die dritte Plateaufläche, bevorzugt auch sämtliche weitere Plateauflächen im Strukturelement, in auf unterschiedlicher Höhe liegen, bezogen auf die orthogonal auf der Reifenoberfläche stehende Richtung.

Es ist bevorzugt, wenn die Plateauflächen, und im Falle eines ansteigenden Höhenunterschieds insbesondere die jeweils äußerste Plateaufläche des Strukturelements, maximal die gleiche Höhe aufweisen, wie die den Strukturbereich umgebende Reifenoberfläche, was dadurch erreicht werden kann, dass die mittlere Oberfläche des Strukturbereichs tiefer ausgelegt wird als die den Strukturbereich umgebende Reifenoberfläche. Dies hat mit Blick auf die aerodynamischen Eigenschaften des erfindungsgemäßen Fahrzeugreifens den Vorteil, dass der Strukturbereich im Vergleich zu der ihm umgebenden Fahrzeugreifenoberfläche keine gegenüber der sonstigen Reifenoberfläche erhabene Strukturen aufweist, welche die Aerodynamik des Fahrzeugreifens negativ beeinflussen könnten. Entsprechend ist es für diesen Fall ebenfalls bevorzugt, wenn sämtliche Bodenflächen in axialer Richtung tiefer liegen als die den Strukturbereich umgebende Reifenoberfläche. Bevorzugt ist insoweit ein erfindungsgemäßer Fahrzeugreifen, wobei die erste Plateaufläche und/oder die zweite Plateaufläche und/oder die dritte Plateaufläche und/oder weitere Plateauflächen, bevorzugt die äußersten Plateauflächen im Strukturelement, auf der gleichen Höhe oder tiefer als die den Strukturbereich umgebende Reifenoberfläche liegen, bezogen auf die orthogonal auf der Reifenoberfläche stehende Richtung. Bevorzugt ist zusätzlich oder alternativ ein erfindungsgemäßer Fahrzeugreifen, wobei die erste Bodenfläche und die zweite Bodenfläche und die dritte Bodenfläche, bevorzugt auch sämtliche weitere Bodenflächen im Strukturelement, tiefer liegen als die den Strukturbereich umgebende Reifenoberfläche, bezogen auf die orthogonal auf der Reifenoberfläche stehende Richtung.

Die Erfindung betrifft zudem ein Verfahren zur Herstellung eines erfindungsgemäßen Fahrzeugreifens, umfassend die Verfahrensschritte:
a) Herstellen eines unvulkanisierten Fahrzeugreifenrohlings, umfassend in zumindest einem Bauteil eine vulkanisierbare Kautschukmischung, und
b) Vulkanisieren des unvulkanisierten Fahrzeugreifenrohlings in einer Vulkanisationsform zum Erhalt eines Fahrzeugreifens,
   wobei die Vulkanisationsform in einem zur Ausbildung einer Reifenschulter und/oder Reifenseitenwand vorgesehenen Bereich einen Prägestrukturbereich umfasst, wobei der Prägestrukturbereich eine Vielzahl von an der Oberfläche der Vulkanisationsform angeordneten Prägestrukturelementen umfasst,
   wobei die Prägestrukturelemente jeweils ein umlaufendes erstes Prägerillenelement mit einer ersten Prägebodenfläche, ein das erste Prägerillenelement umgebendes umlaufendes zweites Prägerillenelement mit einer zweiten Prägebodenfläche und ein das zweite Prägerillenelement umgebendes umlaufendes drittes Prägerillenelement mit einer dritten Prägebodenfläche umfassen,
   wobei das erste Prägerillenelement eine Prägeerhebung mit einer ersten Prägeplateaufläche umgibt, wobei das zweite Prägerillenelement von dem ersten Prägerillenelement durch eine umlaufende Prägeerhebung mit einer zweiten Prägeplateaufläche abgegrenzt ist, wobei das dritte Prägerillenelement von dem zweiten Prägerillenelement durch eine umlaufende Prägeerhebung mit einer dritten Prägeplateaufläche abgegrenzt ist, wobei:
      - T₁ der mittlere Höhenunterschied zwischen der ersten Prägeplateaufläche und der ersten Prägebodenfläche ist,
      - T₂ der mittlere Höhenunterschied zwischen der zweiten Prägeplateaufläche und der zweiten Prägebodenfläche ist,
      - T₃ der mittlere Höhenunterschied zwischen der dritten Prägeplateaufläche und der dritten Prägebodenfläche ist, und
   wobei innerhalb jedes Prägestrukturelements T₁, T₂ und T₃ voneinander verschieden sind.

Das erfindungsgemäße Verfahren dient der Herstellung von Fahrzeugreifen, welche zumindest einen Strukturbereich umfassen, wie es vorstehend offenbart ist.

Hierfür wird in Verfahrensschritt a) ein unvulkanisierter Fahrzeugreifenrohling hergestellt, was beispielsweise in einem üblichen Aufbauverfahren für Fahrzeugreifen erfolgen kann. Entsprechende Verfahren zur Herstellung eines unvulkanisierten Fahrzeugreifenrohlings sind dem Fachmann bekannt. Beispielsweise erfolgt das Herstellen auf einer Reifenaufbautrommel. Solche Reifenaufbautrommeln verfügen zumeist über eine rotierbare Aufnahmevorrichtung für die verschiedenen Teile des Fahrzeugreifenrohlings, die zumeist lagenweise auf dieser Reifenaufbautrommel übereinander angeordnet werden und gehören regelmäßig zur Standardausrüstung eines Reifenherstellers. Für die meisten Fälle relevant ist dabei ein erfindungsgemäßes Verfahren, wobei das Herstellen des unvulkanisierte Fahrzeugreifenrohlings die übereinanderliegende Anordnung mehrerer Lagen umfasst, insbesondere von Karkasslagen und/oder Gürtellagen.

Der unvulkanisierte Fahrzeugreifenrohling umfasst in zumindest einem Bauteil eine vulkanisierbare Kautschukmischung, woraus sich in Übereinstimmung mit dem fachmännischen Verständnis ergibt, dass auch der unvulkanisierte Fahrzeugreifenrohling vulkanisiert werden kann. Es kann als Vorteil des erfindungsgemäßen Verfahrens angesehen werden, dass dieses hinsichtlich der eingesetzten vulkanisierbaren Kautschukmischung nicht limitiert ist, sodass alle im Bereich der Reifenherstellung üblichen Kautschukmischungen eingesetzt werden können. Beispielhaft ist insoweit ein erfindungsgemäßes Verfahren, wobei die vulkanisierbare Kautschukmischung wenigstens einen Dienkautschuk umfasst, wobei der Dienkautschuk bevorzugt ausgewählt ist aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, Styrol-Isopren-Butadien-Terpolymer, und Isopren-Butadien-Copolymer.

Der Fachmann versteht, dass das vorliegende erfindungsgemäße Verfahren so ausgeführt wird, dass die im Verfahren verwendete Vulkanisationsform dem Negativ des vorstehend beschriebenen erfindungsgemäßen Fahrzeugreifens entspricht, die den Strukturbereich in die vulkanisierbare Kautschukmischung einprägt. Es handelt sich somit um ein erfindungsgemäßes Verfahren, wobei das Vulkanisieren so erfolgt, dass der Strukturbereich im Fahrzeugreifen als Negativ des Prägestrukturbereichs der Vulkanisationsform ausgeformt wird, beispielsweise im Bereich der Reifenschulter oder der Reifenseitenwand.

Insofern entsprechen die im erfindungsgemäßen Fahrzeugreifen vorkommenden Erhebungen in der Vulkanisationsform entsprechend komplementär ausgeformten Prägerillenelementen. Dies bedeutet, dass die geometrische Form und Ausführung der ersten Erhebung, der zweiten Erhebung sowie der dritten Erhebung des erfindungsgemäßen Fahrzeugreifens in der Vulkanisationsform dem entsprechend komplementär ausgeformten ersten Prägerillenelement, dem zweiten Prägerillenelement sowie dem dritten Prägerillenelement entsprechen. Folglich korrespondieren ebenfalls die jeweiligen Plateauflächen der Erhebungen des erfindungsgemäßen Fahrzeugreifens mit zugehörigen Prägebodenflächen der jeweiligen Prägerillenelemente der Vulkanisationsform. Selbiges lässt sich auch auf die Ausnehmung sowie die Rillenelemente des erfindungsgemäßen Fahrzeugreifens übertragen. Die Vulkanisationsform umfasst nämlich hierzu korrespondierend die erste Prägeerhebung mit der ersten Prägeplateaufläche sowie die zweite Prägeerhebung mit der zweiten Prägeplateaufläche und die dritte Prägeerhebung mit der dritten Prägeplateaufläche. Dementsprechend haben die mittleren Höhenunterschiede T₁, T₂ und T₃ zwischen den ersten, zweiten und dritten Prägeplateauflächen sowie den ersten, zweiten und dritten Prägebodenflächen den gleichen Betrag, wie die Höhenunterschiede H₁, H₂ und H₃ des mit dem erfindungsgemäßen Verfahrens hergestellten erfindungsgemäßen Fahrzeugreifens. Der Fachmann versteht, dass insofern die vorstehend genannten bevorzugten Ausführungsformen für die Strukturelemente des erfindungsgemäßen Fahrzeugreifens ebenfalls für die Prägestrukturelemente der Vulkanisationsform gelten.

Es kann als Vorteil der Erfindung gesehen werden, dass sich die Strukturbereich im Zuge der Vulkanisation auf die Fahrzeugreifen aufbringen lassen und dass keine nachträgliche Bearbeitung der Reifenoberfläche nötig ist. Insoweit ist ein weiterer Vorteil, dass die für das erfindungsgemäße Verfahren benötigte Vulkanisationsform mit typischen materialabtragenden Verfahren hergestellt werden kann, so dass es zielführend ist, diesen Vorteil auch auszunutzen. Bevorzugt ist entsprechend auch ein erfindungsgemäßes Verfahren, wobei die Vulkanisationsform mit einem materialabtragenden Verfahren hergestellt wird, bevorzugt durch Bearbeitung mit einem Fräswerkzeug.

Offenbart wird ebenfalls eine Verwendung einer Vielzahl von Strukturelementen im Bereich zumindest einer Reifenschulter und/oder zumindest einer Reifenseitenwand eines Fahrzeugreifens, zur Verbesserung der aerodynamischen Eigenschaften,
wobei die Strukturelemente jeweils eine umlaufende erste Erhebung mit einer ersten Plateaufläche, eine die erste Erhebung umgebende umlaufende zweite Erhebung mit einer zweiten Plateaufläche und eine die zweite Erhebung umgebende umlaufende dritte Erhebung mit einer dritten Plateaufläche umfassen,
wobei die erste Erhebung eine Ausnehmung mit einer ersten Bodenfläche umgibt, wobei die zweite Erhebung von der ersten Erhebung durch ein umlaufendes Rillenelement mit einer zweiten Bodenfläche abgegrenzt ist, wobei die dritte Erhebung von der zweiten Erhebung durch ein umlaufendes Rillenelement mit einer dritten Bodenfläche abgegrenzt ist, wobei:
   - H₁ der mittlere Höhenunterschied zwischen der ersten Plateaufläche und der ersten Bodenfläche ist,
   - H₂ der mittlere Höhenunterschied zwischen der zweiten Plateaufläche und der zweiten Bodenfläche ist,
   - H₃ der mittlere Höhenunterschied zwischen der dritten Plateaufläche und der dritten Bodenfläche ist, und
wobei innerhalb jedes Strukturelements H₁, H₂ und H₃ voneinander verschieden sind.

Der Fachmann versteht, dass im Rahmen der Erfindung zudem eine Vulkanisationsform offenbart wird, bevorzugt für den Einsatz in einem erfindungsgemäßen Verfahren, umfassend in einem zur Ausbildung einer Reifenschulter und/oder Reifenseitenwand vorgesehenen Bereich einen Prägestrukturbereich, wobei der Prägestrukturbereich eine Vielzahl von an der Oberfläche der Vulkanisationsform angeordneten Prägestrukturelementen umfasst,
wobei die Prägestrukturelemente jeweils ein umlaufendes erstes Prägerillenelement mit einer ersten Prägebodenfläche, ein das erste Prägerillenelement umgebendes umlaufendes zweites Prägerillenelement mit einer zweiten Prägebodenfläche und ein das zweite Prägerillenelement umgebendes umlaufendes drittes Prägerillenelement mit einer dritten Prägebodenfläche umfassen,
wobei das erste Prägerillenelement eine Prägeerhebung mit einer ersten Prägeplateaufläche umgibt, wobei das zweite Prägerillenelement von dem ersten Prägerillenelement durch eine umlaufende Prägeerhebung mit einer zweiten Prägeplateaufläche abgegrenzt ist, wobei das dritte Prägerillenelement von dem zweiten Prägerillenelement durch eine umlaufende Prägeerhebung mit einer dritten Prägeplateaufläche abgegrenzt ist, wobei:
   - T₁ der mittlere Höhenunterschied zwischen der ersten Prägeplateaufläche und der ersten Prägebodenfläche ist,
   - T₂ der mittlere Höhenunterschied zwischen der zweiten Prägeplateaufläche und der zweiten Prägebodenfläche ist,
   - T₃ der mittlere Höhenunterschied zwischen der dritten Prägeplateaufläche und der dritten Prägebodenfläche ist, und
wobei innerhalb jedes Prägestrukturelements T₁, T₂ und T₃ voneinander verschieden sind.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Darstellung eines erfindungsgemäßen Fahrzeugreifens in einer bevorzugten Ausführungsform in der Draufsicht auf eine Seitenwand des Fahrzeugreifens;
- Fig. 2: eine schematische Darstellung eines vergrößerten Ausschnittes des erfindungsgemäßen Fahrzeugreifens der Fig. 1;
- Fig. 3: eine schematische Draufsicht auf ein beispielhaftes Strukturelement in einer bevorzugten Ausführungsform;
- Fig. 4: eine schematische Querschnittsdarstellung durch das Strukturelement der Fig. 3; und
- Fig. 5: eine schematische Querschnittsdarstellung eines zu der Fig. 4 komplementären Prägestrukturelements einer Vulkanisationsform für den Einsatz in einem erfindungsgemäßen Verfahren zur Herstellung eines erfindungsgemäßen Fahrzeugreifens.

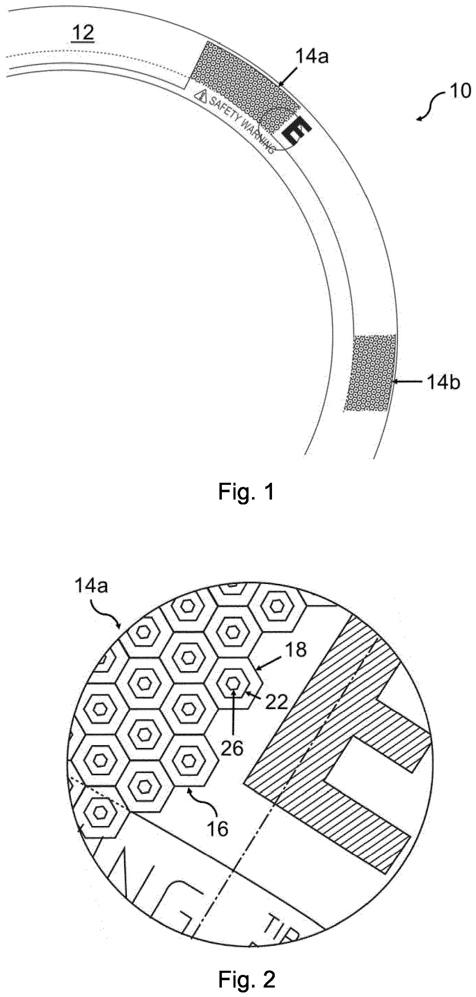

Fig. 1 zeigt schematisch einen erfindungsgemäßen Fahrzeugreifen 10 in einer Draufsicht auf die Seitenwand 12 des Fahrzeugreifens 10. Der erfindungsgemäße Fahrzeugreifen 10 umfasst im Bereich der Seitenwand 12 zwei separate, d. h. insbesondere durch Kennzeichnungsbereiche voneinander getrennte, Strukturbereiche 14a, 14b, welche sich in voneinander abgegrenzten Bereichen entlang der Umfangsrichtung sowie entlang der Radialrichtung des erfindungsgemäßen Fahrzeugreifens 10 erstrecken. Die Strukturbereiche 14a-b bestehen im Wesentlichen vollständig aus einer Vielzahl von Strukturelementen 16. Im gezeigten Beispiel umfassen die Strukturbereiche 14a-b jeweils mehr als 150 Strukturelemente 16. In Fig. 1 kennzeichnet die kreisförmige Markierung den Ausschnitt, der in Fig. 2 vergrößert dargestellt ist.

Wie aus den Fig. 1 und 2 ersichtlich, sind die Strukturelemente 16 in den beiden Strukturbereichen 14a-b jeweils in einem regelmäßigen Muster und auf Stoß aneinander angeordnet, sodass die Strukturelemente 16 im Strukturbereich 14a-b einen kombinierten Flächenanteil von im Wesentlichen 100 % aufweisen, bezogen auf die Fläche des jeweiligen Strukturbereichs 14a-b. Die Strukturelemente 16 weisen im gezeigten Beispiel eine Elementgröße im Bereich von etwa 4 bis 5,5 mm auf, wobei in radialer Richtung innenliegende Strukturelemente 16 kleinere Abmessungen aufweisen als in radialer Richtung außenliegende Strukturelemente 16, um die Form der Strukturbereiche 14a-b an die Krümmung der Reifenseitenwand 12 anzupassen.

Die Strukturelemente 16 weisen, wie in Fig. 2 dargestellt, sämtlich die gleiche spiegelsymmetrische und C₆ rotationssymmetrische geometrische Grundform und -anordnung auf. Jedes Strukturelement 16 umfasst eine erste Erhebung 18, die eine zentrale Ausnehmung 30 umgibt, und eine zweite Erhebung 22 sowie eine dritte Erhebung 26, welche jeweils durch Rillenelemente 34a, 34b voneinander getrennt sind. Innerhalb des Strukturbereichs 14a-b sind nun die Strukturelemente 16 so angeordnet, dass im Strukturbereich 14a-b ein Verband aus einer Vielzahl von Strukturelementen 16 erhalten wird, bei denen jeweils die äußere umlaufende Erhebung, d. h. die dritten Erhebungen 26, durch die gleiche erhabene Struktur gebildet wird, die sich als wabenförmige Struktur auf der Reifenseitenwand 12 erstreckt.

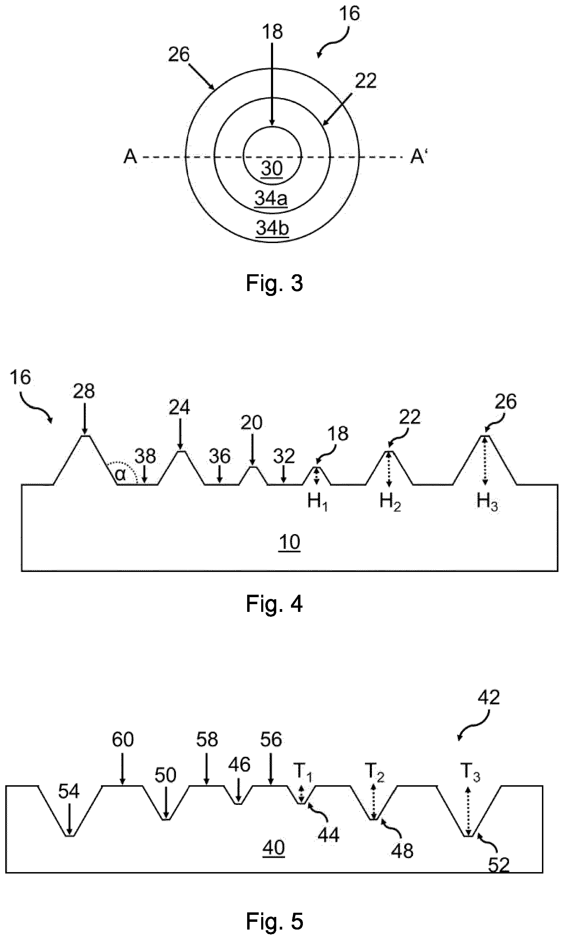

Fig. 3 zeigt eine schematische Draufsicht auf ein beispielhaftes Strukturelement 16 in einer bevorzugten Ausführungsform, wohingegen Fig. 4 eine Querschnittsdarstellung durch dieses Strukturelement 16 entlang der Schnittachse A-A' zeigt. Das gezeigte Strukturelement 16 weist, wie die in den Fig. 1 und 2 gezeigten Strukturelemente 16, genau drei umlaufende Erhebungen auf, welche im Wesentlichen konzentrisch zueinander angeordnet sind. Im Gegensatz zu den Strukturelementen 16 der Fig. 1 und 2, welche eine hexagonale Struktur aufweisen, ist in der in Fig. 3 und 4 gezeigten Ausführungsform das Strukturelement 16, und damit sämtliche Erhebungen, Ausnehmungen und Rillen, kreisförmig ausgebildet, wobei die Querschnittsdarstellung der Fig. 4 auch auf die hexagonalen Strukturelemente 16 der Fig. 1 und 2 übertragbar ist. Wie in der Querschnittsdarstellung der Fig. 4 zu sehen, weisen sämtliche Erhebungen quer zu ihrer Mittellinie, d.h. ihrer Umfangsrichtung, eine trapezförmige Querschnittsfläche auf. Dabei weist die erste Erhebung 18 eine erste Plateaufläche 20 auf, die zweite Erhebung 22 eine zweite Plateaufläche 24 und die dritte Erhebung 26 eine dritte Plateaufläche 28. Analog hierzu umfasst die Ausnehmung 30 eine erste Bodenfläche 32, das mittlere Rillenelement 34a eine zweite Bodenfläche 36 und das äußere Rillenelement 34b eine dritte Bodenfläche 38.

Sämtliche Plateauflächen und sämtliche Bodenflächen im Strukturelement 16 weisen Außenumrisse auf, die durch zentrische Streckung ineinander überführt werden können. Zudem variieren in der gezeigten bevorzugten Ausführungsform weder die Stegbreiten der Plateauflächen noch die mittleren Öffnungswinkel der Rillenelemente 34a-b innerhalb des Strukturelements 16. Die mittlere Stegbreite der Plateauflächen quer zur Mittellinie beträgt im gezeigten Beispiel 0,15 mm.

Aus der Fig. 4 ist ebenfalls ersichtlich, dass sämtliche Erhebungen eine Seitenwand aufweisen, die relativ zu der angrenzenden Bodenfläche einen Winkel α von 120° einschließen, und dadurch relativ zu der entsprechenden Bodenfläche eine Steigung von etwa 60° aufweisen. Dadurch entspricht der Querschnitt der ersten Erhebung 18, der zweiten Erhebung 22 und der dritten Erhebung 26 in der Form einem gleichschenkligen Trapez. Die erste Bodenfläche 32, die zweite Bodenfläche 36 und die dritte Bodenfläche 38 liegen relativ zueinander auf gleicher Höhe und gleichzeitig tiefer als die den Strukturbereich 14a-b umgebende Reifenoberfläche (nicht gezeigt).Gleichzeitig liegen die erste Plateaufläche 20, die zweite Plateaufläche 24 und die dritte Plateaufläche 28 relativ zueinander auf unterschiedliche Höhe, wobei die dritte Plateaufläche 28 auf der Höhe der den Strukturbereich 14a-b umgebenden Reifenoberfläche (nicht gezeigt) liegt.

Der mittlere Höhenunterschied H₁ zwischen der ersten Plateaufläche 20 und der ersten Bodenfläche 32 beträgt im gezeigten Beispiel etwa 0,2 mm. Der mittlere Höhenunterschied H₂ zwischen der zweiten Plateaufläche 24 und der zweiten Bodenfläche 36 beträgt etwa 0,4 mm und der mittlere Höhenunterschied H₃ zwischen der dritten Plateaufläche 28 und der dritten Bodenfläche 38 beträgt etwa 0,6 mm. Dadurch, dass der mittlere Höhenunterschied H₁ kleiner ist als der mittlere Höhenunterschied H₂, welcher wiederum kleiner ist als der mittlere Höhenunterschied H₃, ergibt sich in der schrägen Draufsicht auf die Oberfläche des Fahrzeugreifens eine besonders vorteilhafte grübchenartige Struktur.

Fig. 5 zeigt eine abschnittsweise Querschnittsdarstellung einer beispielhaften Vulkanisationsform 40, die zur Herstellung des Strukturelements 16 der Fig. 3 in einem erfindungsgemäßen Verfahren eingesetzt werden kann. Die Vulkanisationsform 40 zur Herstellung des erfindungsgemäßen Fahrzeugreifens 10 umfasst in dem zur Ausbildung der Reifenschulter und/oder Reifenseitenwand 12 vorgesehenen Bereich, komplementär zum Strukturbereich 14a-b des Fahrzeugreifens 10, einen Prägestrukturbereich mit einer Vielzahl von Prägestrukturelementen 42. Jedes Prägestrukturelement 42 umfasst - komplementär zu dem Strukturelement 16 - eine erste Prägebodenfläche 46 eines ersten Prägerillenelements 44, eine zweite Prägebodenfläche 50 eines zweiten Prägerillenelements 48 und eine dritte Prägebodenfläche 54 eines dritten Prägerillenelements 52. Diese korrespondieren bezüglich ihrer Abmessungen mit denen der ersten Plateaufläche 20, der zweiten Plateaufläche 24 und der dritten Plateaufläche 28 des Strukturelements 16. Entsprechend umfasst das Prägestrukturelement 42 ebenfalls eine zur ersten Bodenfläche 32, zweiten Bodenfläche 36 und dritten Bodenfläche 38 komplementäre erste Prägeplateaufläche 56, zweite Prägeplateaufläche 58 und dritte Prägeplateaufläche 60.

Wie aus dem direkten Vergleich der Fig. 3 und 4 ersichtlich, entspricht somit die Vulkanisationsform 40 im Prägestrukturbereich dem Negativ des Strukturbereichs 14a-b im erfindungsgemäßen Fahrzeugreifen 10. Dementsprechend sind jeweils der mittlere Höhenunterschied T₁ zwischen der ersten Prägeplateaufläche 56 und der ersten Prägebodenfläche 46 und der erste Höhenunterschied H₁ zwischen der ersten Plateaufläche 20 und der ersten Bodenfläche 32 des Strukturelements 16, sowie die mittleren Höhenunterschiede T₂ und H₂ sowie T₃ und H₃ betragsmäßig gleich. Die in Fig. 5 gezeigte Vulkanisationsform 40 kann in vorteilhafter Weise zeit- und kosteneffizient mit einem materialabtragenden Verfahren hergestellt werden, beispielsweise mittels eines Fräswerkzeugs, insbesondere mittels eines Stichels.

### Bezugszeichenliste

- 10: Fahrzeugreifen
- 12: Reifenseitenwand
- 14a-b: Strukturbereich
- 16: Strukturelement
- 18: erste Erhebung
- 20: erste Plateaufläche
- 22: zweite Erhebung
- 24: zweite Plateaufläche
- 26: dritte Erhebung
- 28: dritte Plateaufläche
- 30: Ausnehmung
- 32: erste Bodenfläche
- 34a-b: Rillenelement
- 36: zweite Bodenfläche
- 38: dritte Bodenfläche
- 40: Vulkanisationsform
- 42: Prägestrukturelement
- 44: erstes Prägerillenelement
- 46: erste Prägebodenfläche
- 48: zweites Prägerillenelement
- 50: zweite Prägebodenfläche
- 52: drittes Prägerillenelement
- 54: dritte Prägebodenfläche
- 56: erste Prägeplateaufläche
- 58: zweite Prägeplateaufläche
- 60: dritte Prägeplateaufläche

- α: Winkel
- A, A': Schnittachse

## Patentansprüche

1. Fahrzeugreifen (10), umfassend im Bereich zumindest einer Reifenschulter und/oder zumindest einer Reifenseitenwand (12), einen Strukturbereich (14a, 14b), wobei der Strukturbereich (14a-b) eine Vielzahl von an der Oberfläche des Fahrzeugreifens angeordneten Strukturelementen (16) umfasst,
wobei die Strukturelemente (16) jeweils eine umlaufende erste Erhebung (18) mit einer ersten Plateaufläche (20), eine die erste Erhebung (18) umgebende umlaufende zweite Erhebung (22) mit einer zweiten Plateaufläche (24) und eine die zweite Erhebung (22) umgebende umlaufende dritte Erhebung (26) mit einer dritten Plateaufläche (28) umfassen,
wobei die erste Erhebung (18) eine Ausnehmung (30) mit einer ersten Bodenfläche (32) umgibt, wobei die zweite Erhebung (22) von der ersten Erhebung (18) durch ein umlaufendes Rillenelement (34a) mit einer zweiten Bodenfläche (36) abgegrenzt ist, wobei die dritte Erhebung (26) von der zweiten Erhebung (22) durch ein umlaufendes Rillenelement (34b) mit einer dritten Bodenfläche (38) abgegrenzt ist, wobei:
- H₁ der mittlere Höhenunterschied zwischen der ersten Plateaufläche (20) und der ersten Bodenfläche (32) ist,
- H₂ der mittlere Höhenunterschied zwischen der zweiten Plateaufläche (24) und der zweiten Bodenfläche (36) ist,
- H₃ der mittlere Höhenunterschied zwischen der dritten Plateaufläche (28) und der dritten Bodenfläche (38) ist, und
wobei innerhalb jedes Strukturelements (16) H₁, H₂ und H₃ voneinander verschieden sind,
wobei sich zumindest ein Strukturbereich (14ab) entlang der Umfangsrichtung des Fahrzeugreifens (10) erstreckt, wobei die Strukturelemente (16) im Strukturbereich (14a-b) entlang der radialen Richtung unterschiedliche Abmessungen aufweisen, wobei die in radialer Richtung innenliegenden Strukturelemente (16) bevorzugt kleiner sind als die in radialer Richtung außenliegenden Strukturelemente (16).

2. Fahrzeugreifen (10) nach Anspruch 1, wobei der kombinierte Flächenanteil sämtlicher Strukturbereiche (14a-b) auf einer Reifenseitenwand (12) oder Reifenschulter 10 % oder mehr, bevorzugt 20 % oder mehr, besonders bevorzugt 30 % oder mehr, beträgt, bezogen auf die Oberfläche der Reifenseitenwand (12) oder Reifenschulter.

3. Fahrzeugreifen (10) nach einem der Ansprüche 1 oder 2, wobei die Strukturelemente (16) in zumindest einem Strukturbereich (14a-b) zumindest teilweise so nebeneinander angeordnet sind, dass im Strukturbereich (14a-b) ein Verband aus einer Vielzahl von Strukturelementen (16) erhalten wird, bei denen jeweils die äußere umlaufende Erhebung durch die gleiche erhabene Struktur gebildet wird.

4. Fahrzeugreifen (10) nach einem der Ansprüche 1 bis 3, wobei innerhalb jedes Strukturelements (16) H₁ kleiner ist als H₂, bevorzugt um 20 % oder mehr, und/oder
wobei innerhalb jedes Strukturelements (16) H₂ kleiner ist als H₃, bevorzugt um 10 % oder mehr,
wobei bevorzugt innerhalb jedes Strukturelements (16) gilt, dass H₁ < H₂ < H₃.

5. Fahrzeugreifen (10) nach einem der Ansprüche 1 bis 4, wobei die erste Plateaufläche (20) und/oder die zweite Plateaufläche (24) und/oder die dritte Plateaufläche (28), einen Außenumriss aufweisen, dessen Form ausgewählt ist aus der Gruppe bestehend aus Polygonen und Ellipsen, bevorzugt ausgewählt ist aus der Gruppe bestehend aus Hexagonen, Vierecken und Kreisen.

6. Fahrzeugreifen (10) nach einem der Ansprüche 1 bis 5, wobei die Strukturelemente (16) zumindest teilweise weitere umlaufende (n)-te Erhebungen mit weiteren (n)-ten Plateauflächen aufweisen, welche die (n-1)-te Erhebung umgeben, wobei jede (n)-te Erhebung von der (n-1)-ten Erhebung durch ein umlaufendes Rillenelement mit einer (n)-ten Bodenfläche abgegrenzt ist, wobei
- Hₙ der mittlere Höhenunterschied zwischen der (n)-ten Plateaufläche und der (n)-ten Bodenfläche ist.

7. Fahrzeugreifen (10) nach einem der Ansprüche 1 bis 6, wobei die erste Bodenfläche (32) und die zweite Bodenfläche (36) und die dritte Bodenfläche (38), relativ zueinander auf gleicher Höhe liegen, bezogen auf die orthogonal auf der Reifenoberfläche stehende Richtung.

8. Fahrzeugreifen (10) nach einem der Ansprüche 1 bis 7, wobei die Strukturelemente (16) zumindest teilweise eine Elementgröße im Bereich von 3 bis 8,5 mm aufweisen, wobei die Elementgröße der größte Abstand zwischen zwei Punkten auf dem Außenumriss der Plateaufläche der äußersten Erhebung ist.

9. Verfahren zur Herstellung eines Fahrzeugreifens (10) nach einem der Ansprüche 1 bis 8, umfassend die Verfahrensschritte:
a) Herstellen eines unvulkanisierten Fahrzeugreifenrohlings, umfassend in zumindest einem Bauteil eine vulkanisierbare Kautschukmischung, und
b) Vulkanisieren des unvulkanisierten Fahrzeugreifenrohlings in einer Vulkanisationsform (40) zum Erhalt eines Fahrzeugreifens (10),
wobei die Vulkanisationsform (40) in einem zur Ausbildung einer Reifenschulter und/oder Reifenseitenwand vorgesehenen Bereich einen Prägestrukturbereich umfasst, wobei der Prägestrukturbereich eine Vielzahl von an der Oberfläche der Vulkanisationsform angeordneten Prägestrukturelementen (42) umfasst,
wobei die Prägestrukturelemente (42) jeweils ein umlaufendes erstes Prägerillenelement (44) mit einer ersten Prägebodenfläche (46), ein das erste Prägerillenelement (44) umgebendes umlaufendes zweites Prägerillenelement (48) mit einer zweiten Prägebodenfläche (50) und ein das zweite Prägerillenelement (48) umgebendes umlaufendes drittes Prägerillenelement (52) mit einer dritten Prägebodenfläche (54) umfassen,
wobei das erste Prägerillenelement (44) eine Prägeerhebung mit einer ersten Prägeplateaufläche (56) umgibt, wobei das zweite Prägerillenelement (48) von dem ersten Prägerillenelement (44) durch eine umlaufende Prägeerhebung mit einer zweiten Prägeplateaufläche (58) abgegrenzt ist, wobei das dritte Prägerillenelement (52) von dem zweiten Prägerillenelement (48) durch eine umlaufende Prägeerhebung mit einer dritten Prägeplateaufläche (60) abgegrenzt ist, wobei:
- T₁ der mittlere Höhenunterschied zwischen der ersten Prägeplateaufläche (56) und der ersten Prägebodenfläche (46) ist,
- T₂ der mittlere Höhenunterschied zwischen der zweiten Prägeplateaufläche (58) und der zweiten Prägebodenfläche (50) ist,
- T₃ der mittlere Höhenunterschied zwischen der dritten Prägeplateaufläche (60) und der dritten Prägebodenfläche (54) ist, und
wobei innerhalb jedes Prägestrukturelements (40) T₁, T₂ und T₃ voneinander verschieden sind.

## Claims

1. Vehicle tyre (10), comprising, in the region of at least one tyre shoulder and/or at least one tyre sidewall (12), a structural region (14a, 14b), wherein the structural region (14a-b) comprises a plurality of structural elements (16) arranged on the surface of the vehicle tyre,
wherein the structural elements (16) each comprise a circumferential first elevation (18) having a first plateau face (20), a circumferential second elevation (22), which surrounds the first elevation (18) and has a second plateau face (24), and a circumferential third elevation (26), which surrounds the second elevation (22) and has a third plateau face (28),
wherein the first elevation (18) surrounds a recess (30) having a first bottom face (32), wherein the second elevation (22) is delimited from the first elevation (18) by a circumferential groove element (34a) having a second bottom face (36), wherein the third elevation (26) is delimited from the second elevation (22) by a circumferential groove element (34b) having a third bottom face (38), wherein:
- H₁ is the mean height difference between the first plateau face (20) and the first bottom face (32),
- H₂ is the mean height difference between the second plateau face (24) and the second bottom face (36),
- H₃ is the mean height difference between the third plateau face (28) and the third bottom face (38), and
wherein, within each structural element (16), H₁, H₂ and H₃ are different from one another, wherein at least one structural region (14a-b) extends along the circumferential direction of the vehicle tyre (10), wherein the structural elements (16) in the structural region (14a-b) have different dimensions along the radial direction, wherein the radially inner structural elements (16) are preferably smaller than the radially outer structural elements (16).

2. Vehicle tyre (10) according to Claim 1, wherein the combined area proportion of all of the structural regions (14a-b) on a tyre sidewall (12) or tyre shoulder is 10% or more, preferably 20% or more, particularly preferably 30% or more, with respect to the surface area of the tyre sidewall (12) or tyre shoulder.

3. Vehicle tyre (10) according to either of Claims 1 and 2, wherein at least some of the structural elements (16) are arranged adjacent to one another in at least one structural region (14a-b) so as to obtain, in the structural region (14a-b), an assembly consisting of a plurality of structural elements (16), in each of which the outer circumferential elevation is formed by the same elevated structure.

4. Vehicle tyre (10) according to one of Claims 1 to 3, wherein, within each structural element (16), H₁ is smaller than H₂, preferably by 20% or more, and/or wherein, within each structural element (16), H₂ is smaller than H₃, preferably by 10% or more,
wherein preferably, within each structural element (16), H₁ < H₂ < H₃.

5. Vehicle tyre (10) according to one of Claims 1 to 4, wherein the first plateau face (20) and/or the second plateau face (24) and/or the third plateau face (28) have/has an outer outline, the shape of which is selected from the group consisting of polygons and ellipses, preferably selected from the group consisting of hexagons, quadrilaterals and circles.

6. Vehicle tyre (10) according to one of Claims 1 to 5, wherein at least some of the structural elements (16) have further circumferential (n)th elevations having further (n)th plateau faces, which surround the (n-1)th elevation, wherein each (n)th elevation of the (n-1)th elevation is delimited by a circumferential groove element having an (n)th bottom face, wherein
- Hₙ is the mean height difference between the (n)th plateau face and the (n)th bottom face.

7. Vehicle tyre (10) according to one of Claims 1 to 6, wherein the first bottom face (32), the second bottom face (36) and the third bottom face (38) are at the same height relative to one another, with respect to the direction orthogonal to the tyre surface.

8. Vehicle tyre (10) according to one of Claims 1 to 7, wherein at least some of the structural elements (16) have an element size in the range from 3 to 8.5 mm, wherein the element size is the largest distance between two points on the outer outline of the plateau face of the outermost elevation.

9. Method for producing a vehicle tyre (10) according to one of Claims 1 to 8, comprising the method steps of:
a) producing a non-vulcanized vehicle tyre blank, comprising a vulcanizable rubber compound in at least one component, and
b) vulcanizing the non-vulcanized vehicle tyre blank in a vulcanization mould (40) to obtain a vehicle tyre (10),
wherein the vulcanisation mould (40) comprises an embossing structural region in a region provided for forming a tyre shoulder and/or tyre sidewall, wherein the embossing structural region comprises a plurality of embossing structural elements (42) arranged on the surface of the vulcanisation mould,
wherein the embossing structural elements (42) each comprise a circumferential first embossing groove element (44) having a first embossing bottom face (46), a circumferential second embossing groove element (48), which surrounds the first embossing groove element (44) and has a second embossing bottom face (50), and a circumferential third embossing groove element (52), which surrounds the second embossing groove element (48) and has a third embossing bottom face (54),
wherein the first embossing groove element (44) surrounds an embossing elevation having a first embossing plateau face (56), wherein the second embossing groove element (48) is delimited from the first embossing groove element (44) by a circumferential embossing elevation having a second embossing plateau face (58), wherein the third embossing groove element (52) is delimited from the second embossing groove element (48) by a circumferential embossing elevation having a third embossing plateau face (60), wherein:
- T₁ is the mean height difference between the first embossing plateau face (56) and the first embossing bottom face (46),
- T₂ is the mean height difference between the second embossing plateau face (58) and the second embossing bottom face (50),
- T₃ is the mean height difference between the third embossing plateau face (60) and the third embossing bottom face (54), and
wherein, within each embossing structural element (40), T₁, T₂ and T₃ are different from one another.

## Revendications

1. Pneu de véhicule (10), comprenant dans la zone d'au moins un épaulement de pneu et/ou d'au moins un flanc de pneu (12), une zone de structure (14a, 14b), la zone de structure (14a-b) comprenant une pluralité d'éléments de structure (16) agencés à la surface du pneu de véhicule,
les éléments de structure (16) comprenant respectivement une première surélévation périphérique (18) ayant une première surface de plateau (20), une deuxième surélévation périphérique (22) entourant la première surélévation (18) et ayant une deuxième surface de plateau (24), et une troisième surélévation périphérique (26) entourant la deuxième surélévation (22) et ayant une troisième surface de plateau (28),
la première surélévation (18) entourant un évidement (30) ayant une première surface de fond (32), la deuxième surélévation (22) étant délimitée par rapport à la première surélévation (18) par un élément rainuré périphérique (34a) ayant une deuxième surface de fond (36), la troisième surélévation (26) étant délimitée par rapport à la deuxième surélévation (22) par un élément rainuré périphérique (34b) ayant une troisième surface de fond (38), dans lequel :
- H₁ est la différence de hauteur moyenne entre la première surface de plateau (20) et la première surface de fond (32),
- H₂ est la différence de hauteur moyenne entre la deuxième surface de plateau (24) et la deuxième surface de fond (36),
- H₃ est la différence de hauteur moyenne entre la troisième surface de plateau (28) et la troisième surface de fond (38), et
dans lequel, à l'intérieur de chaque élément de structure (16), H₁, H₂ et H₃ sont différentes les unes des autres, au moins une zone de structure (14a-b) s'étendant dans la direction circonférentielle du pneu de véhicule (10), les éléments de structure (16) dans la zone de structure (14a-b) ayant des dimensions différentes dans la direction radiale, les éléments de structure (16) situés à l'intérieur dans la direction radiale étant de préférence plus petits que les éléments de structure (16) situés à l'extérieur dans la direction radiale.

2. Pneu de véhicule (10) selon la revendication 1, dans lequel la proportion de surface combinée de l'ensemble des zones de structure (14a-b) sur un flanc de pneu (12) ou un épaulement de pneu est de 10 % ou plus, de préférence de 20 % ou plus, de manière particulièrement préférée de 30 % ou plus, par rapport à la surface du flanc de pneu (12) ou de l'épaulement de pneu.

3. Pneu de véhicule (10) selon l'une des revendications 1 ou 2, dans lequel les éléments de structure (16) sont agencés au moins partiellement les uns à côté des autres dans au moins une zone de structure (14a-b) de manière à obtenir dans la zone de structure (14a-b) un regroupement d'une pluralité d'éléments de structure (16) dont chaque surélévation périphérique extérieure est formée par la même structure surélevée.

4. Pneu de véhicule (10) selon l'une des revendications 1 à 3, dans lequel, à l'intérieur de chaque élément de structure (16), H₁ est inférieure à H₂, de préférence de 20 % ou plus, et/ou
dans lequel, à l'intérieur de chaque élément de structure (16), H₂ est inférieure à H₃, de préférence de 10 % ou plus,
dans lequel, de préférence, à l'intérieur de chaque élément de structure (16), H₁ < H₂ < H₃.

5. Pneu de véhicule (10) selon l'une des revendications 1 à 4, dans lequel la première surface de plateau (20) et/ou la deuxième surface de plateau (24) et/ou la troisième surface de plateau (28), présentent un contour extérieur dont la forme est choisie dans le groupe constitué par des polygones et des ellipses, et de préférence est choisie dans le groupe constitué par des hexagones, des quadrilatères et des cercles.

6. Pneu de véhicule (10) selon l'une des revendications 1 à 5, dans lequel les éléments de structure (16) présentent au moins partiellement d'autres (n)èmes surélévations périphériques ayant d'autres (n)èmes surfaces de plateau qui entourent la (n-1)ème surélévation, chaque (n)ème surélévation étant délimitée par rapport à la (n-1)ème surélévation par un élément rainuré périphérique ayant une (n)ème surface de fond, dans lequel
- Hₙ est la différence de hauteur moyenne entre la (n)ième surface de plateau et la (n)ième surface de fond.

7. Pneu de véhicule (10) selon l'une des revendications 1 à 6, dans lequel la première surface de fond (32) et la deuxième surface de fond (36) et la troisième surface de fond (38) sont situées à la même hauteur l'une par rapport à l'autre, relativement à la direction orthogonale à la surface du pneu.

8. Pneu de véhicule (10) selon l'une des revendications 1 à 7, dans lequel les éléments de structure (16) présentent au moins partiellement une taille d'élément se situant dans la plage de 3 à 8,5 mm, la taille d'élément étant la plus grande distance entre deux points sur le contour extérieur de la surface de plateau de la surélévation la plus extérieure.

9. Procédé de fabrication d'un pneu de véhicule (10) selon l'une des revendications 1 à 8, comprenant les étapes de procédé suivantes :
a) fabrication d'une ébauche de pneu de véhicule non vulcanisée, comprenant dans au moins un constituant une composition de caoutchouc vulcanisable, et
b) vulcanisation de l'ébauche de pneu de véhicule non vulcanisée dans un moule de vulcanisation (40) pour obtenir un pneu de véhicule (10),
le moule de vulcanisation (40) comprenant une zone de structure gaufrée dans une zone prévue pour créer un épaulement de pneu et/ou un flanc de pneu, la zone de structure gaufrée comprenant une pluralité d'éléments de structure gaufrés (42) agencés à la surface du moule de vulcanisation,
les éléments de structure gaufrés (42) comprenant respectivement un premier élément rainuré gaufré périphérique (44) ayant une première surface de fond gaufrée (46), un deuxième élément rainuré gaufré périphérique (48) entourant le premier élément rainuré gaufré (44) ayant une deuxième surface de fond gaufrée (50) et un troisième élément rainuré gaufré périphérique (52) entourant le deuxième élément rainuré gaufré (48) ayant une troisième surface de fond gaufrée (54),
le premier élément rainuré gaufré (44) entourant une surélévation gaufrée ayant une première surface de plateau gaufrée (56), le deuxième élément rainuré gaufré (48) étant délimité par rapport au premier élément rainuré gaufré (44) par une surélévation gaufrée périphérique ayant une deuxième surface de plateau gaufrée (58), le troisième élément rainuré gaufré (52) étant délimité par rapport au deuxième élément rainuré gaufré (48) par une surélévation gaufrée périphérique ayant une troisième surface de plateau gaufrée (60), dans lequel :
- T₁ est la différence de hauteur moyenne entre la première surface de plateau gaufrée (56) et la première surface de fond gaufrée (46),
- T₂ est la différence de hauteur moyenne entre la deuxième surface de plateau gaufrée (58) et la deuxième surface de fond gaufrée (50),
- T₃ est la différence de hauteur moyenne entre la troisième surface de plateau gaufrée (60) et la troisième surface de fond gaufrée (54), et
T₁, T₂ et T₃ étant différentes les unes des autres à l'intérieur de chaque élément de structure gaufré (40).
